# EUROPÄISCHE PATENTSCHRIFT

(11) **EP 2 832 240 B1**
(45) Veröffentlichungstag und Bekanntmachung des Hinweises auf die Patenterteilung: **14.09.2016**
(21) Anmeldenummer: 13003793.0
(22) Anmeldetag: 30.07.2013
(51) Int. Cl.: A23L 2/38, A23L 2/70, A23L 2/80, A23L 2/84

(54) **Verfahren zur Reduktion des Saccharidgehalts von Saftkonzentraten**
Method for reducing the saccharide content of juice concentrates
Procédé de réduction de la teneur en saccharide de jus concentrés

(43) Veröffentlichungstag der Anmeldung: 04.02.2015
(73) Patentinhaber: Clariant International Ltd., 4132 Muttenz 1 (CH)
(72) Erfinder: Michael Zavrel, 82140 Olching (DE); Danielle Dennewald, 80798 München (DE)
(74) Vertreter: Graser, Konstanze

(56) Entgegenhaltungen:
- EP-A1- 0 382 010
- WO-A1-03/068905
- CH-A5- 668 887

## Beschreibung

Die vorliegende Erfindung betrifft ein Verfahren zur Reduktion des Saccharidgehalts in Saftkonzentraten mit einer anfänglichen Saccharidkonzentration von mehr als 20% (w/v).

Säfte werden großtechnisch meist aus Konzentraten hergestellt. Dies liegt im Wesentlichen daran, dass Rohsäfte bereits im Ursprungsland bzw. beim Saftproduzenten auf einen Bruchteil (beispielsweise ein Fünftel) ihres anfänglichen Volumens reduziert werden können, was sich positiv auf Transport- und Weiterverarbeitungskosten auswirkt. Aus diesen Gründen wird beispielsweise der überwiegende Teil der weltweit verkauften Orangensaftprodukte aus Konzentrat hergestellt.

In der Weiterverarbeitung wird das Saftkonzentrat durch Wasserzugabe wieder auf den ursprünglichen Wassergehalt des Rohsafts rückverdünnt. Seit geraumer Zeit besteht eine Nachfrage der Verbraucher jedoch nicht mehr allein nach einfachen Saftprodukten, die durch gewöhnliche Rückverdünnung entstanden sind. Verbraucher werden zunehmend gesundheitsbewusster und sind insbesondere immer stärker an kalorienarmen und kalorienreduzierten Produkten interessiert.

Daher ist es gegenwärtig von besonderem Interesse, Säfte anbieten zu können, deren Saccharidgehalt im Vergleich zu Rohsäften deutlich reduziert wurde. Im Stand der Technik sind Verfahren zur Reduktion des Saccharidgehalts in Säften bekannt. Ein typisches Verfahren zur Reduktion des Saccharidgehalts in Säften beschreibt beispielsweise die US 4,971,813, bei dem der im Rohsaft enthaltene Zucker während einer Fermentation in Alkohol umgewandelt und der so gebildete Alkohol durch Destillation entfernt wird.

Der Saccharidgehalt von Säften liegt weit unterhalb des Gehalts von Saftkonzentraten, sodass diese Verfahren nicht für Konzentrate als Ausgangsmaterial geeignet sind. Insbesondere bei Saftkonzentraten mit einem Saccharidgehalt von mehr als 20% (w/v) kann häufig nur ein Teil der Saccharide abgebaut werden, da durch eine rasch ansteigende Alkoholkonzentration der Stoffwechsel der zur Fermentation eingesetzten Mikroorganismen stark verlangsamt und oft sogar inhibiert wird. Eine Abtrennung des gebildeten Alkohols durch Destillation ist zudem gerade in diesem Fall besonders nachteilig, da die verbliebenen Saccharide zusammen mit im Konzentrat vorhandenen Aminverbindungen bereits bei geringer Erwärmung sogenannte Maillard-Reaktionen eingehen. Maillard-Reaktionen können zu zahlreichen unerwünschten Verbindungen führen. Zudem wird eine unschöne dunkle Verfärbung des Konzentrats hervorgerufen. Auch wirken sich diese Verbindungen negativ auf die sensorischen Eigenschaften des Konzentrats und des daraus hergestellten Safts aus.

Da weltweit der überwiegende Teil der kommerziell erhältlichen Säfte und Saftgetränke aus Konzentrat hergestellt wird, sind diese Verfahren für die großtechnische Herstellung kalorienarmer Säfte und Saftgetränke somit nicht interessant.

Die Erfinder der vorliegenden Anmeldung haben sich daher die Aufgabe gestellt, ein Verfahren zu entwickeln, das die im Stand der Technik bekannten Nachteile nicht aufweist und insbesondere eine weitgehende bis vollständige Entfernung von Sacchariden aus Saftkonzentraten erlaubt. Zudem haben es sich die Erfinder der vorliegenden Erfindung zur Aufgabe gestellt, ein Verfahren zu entwickeln, das neben einer weitgehenden bis vollständigen Reduktion der Saccharide aus Saftkonzentraten auch ein Endprodukt ergibt, dessen sensorische und toxikologische Eigenschaften gegenüber dem Ausgangsprodukt nicht verschlechtert sind. Schließlich haben es sich die Erfinder der vorliegenden Erfindung zur Aufgabe gestellt, ein Verfahren zur Reduktion von Sacchariden in Saftkonzentraten zu entwickeln, das produktionstechnisch für Anwendungen im großindustriellen Bereich geeignet ist und/oder kosteneffizient durchgeführt werden kann.

Es wurde nun überraschend gefunden, dass jede dieser Aufgaben gelöst wird durch ein Verfahren zur Reduktion des Saccharidgehalts in Saftkonzentraten mit einer anfänglichen Saccharidkonzentration von mehr als 20% (w/v) umfassend die Schritte
a) In-Kontakt-Bringen des Saftkonzentrats mit mindestens einem Mikroorganismus
b) Fermentation des Saftkonzentrats
c) In-Kontakt-Bringen des Saftkonzentrats mit einer gasförmigen Zusammensetzung
d) In-Kontakt-Bringen der gasförmigen Zusammensetzung mit einem Adsorber, wobei der Adsorber einen Zeolithen umfasst
wobei die Schritte c) und d) zumindest zeitweise gleichzeitig erfolgen.

Unter dem Begriff "In-Kontakt-Bringen" wird im Rahmen von Schritt a) jede Art des In-Kontakt-Bringens verstanden, die dem Fachmann als für den erfindungsgemäßen Zweck geeignet erscheint. In einer bevorzugten Ausführungsform erfolgt das in-Kontakt-Bringen gemäß Schritt a) des erfindungsgemäßen Verfahrens durch Hineingeben des mindestens einen Mikroorganismus in das Saftkonzentrat.

Unter dem Begriff "Mikroorganismus" wird im Rahmen der vorliegenden Erfindung bevorzugt jeder Mikroorganismus verstanden, der in der Lage ist, die in dem Saftkonzentrat enthaltenen Saccharide zu Alkohol(en) und/oder weiteren flüchtigen organischen Verbindungen umzusetzen. Unter dem Begriff "Alkohol" werden im Rahmen der vorliegenden Erfindung alle Verbindungen verstanden, die der Fachmann unter den Begriff "Alkohol" subsumiert, insbesondere Methanol, Ethanol, Propanol, Butanol, Pentanol und deren jeweilige Isomere, wobei Ethanol besonders bevorzugt ist. Unter dem Begriff "weitere flüchtige organische Verbindungen" werden im Rahmen der vorliegenden Erfindung alle Verbindungen verstanden, die der Fachmann in diesem Zusammenhang unter den Begriff "flüchtige organische Verbindungen" subsumiert, wie beispielsweise organische Säuren (beispielsweise Essigsäure) und/oder organische Ester. Bevorzugt handelt es sich bei dem "Mikroorganismus" um eine Hefe oder ein Bakterium. Besonders bevorzugt sind die Hefen der Gattung *Saccharomyces cerevisiae,* oder Hefen und/oder Bakterien mit ähnlichen Fermentationseigenschaften wie beispielsweise *Pichia stipitis, Pichia segobiensis, Candida shehatae, Candida tropicalis, Candida boidinii, Candida tenuis, Pachysolen tannophilus, Hansenula polymorpha, Caridida famata, Candida parapsilosis, Candida rugosa, Candida sonorensis, Issatchenkia terricola, Kloeckera apis, Pichia barkeri, Pichia cactophila, Pichia deserticola, Pichia norvegensis, Pichia membranaefaciens, Pichia mexicana, Torulaspora delbrueckii, Candida bovina, Candida picachoensis, Candida emberorum, Candida pintolopesii, Candida thermophila, Kluyveromyces marxianus, Kluyveromyces fragilis, Kazachstania telluris, Issatchenkia orientalis, Lachancea thermotolerans, Clostridium thermocellum, Clostridium thermohydrosulphuricum, Clostridium thermosaccharolyticium, Thermoanaerobium brockii, Thermobacteroides acetoethylicus, Thermoanaerobacter ethanolicus, Clostridium thermoaceticum, Clostridium thermoautotrophicum, Acetogenium kivui, Desulfotomaculum nigrificans, und Desulfovibrio thermophilus, Thermoanaerobacter tengcongensis, Bacillus stearothermophilus und Thermoanaerobacter mathranii.* Ebenfalls gut geeignet sind im Rahmen des erfindungsgemäßen Verfahrens Milchsäurebakterien und/oder Essigsäurebakterien, die Saccharide zu Alkohol und/oder weiteren flüchtigen organischen Verbindungen umsetzen können. Im Rahmen des erfindungsgemäßen Verfahrens können auch Kombinationen von einem oder mehreren der genannten Mikroorganismen eingesetzt werden, wobei Kombinationen von Hefen und Essigsäurebakterien oder Kombinationen von Hefen und Milchsäurebakterien besonders bevorzugt sind. Insbesondere bevorzugt handelt es sich bei den Hefen um mindestens eine Hefe aus der Gattung Saccharomyces.

Unter dem Begriff "Fermentation" wird im Rahmen der vorliegenden Erfindung jede Art der biologischen Umwandlung organischer Stoffe durch den mindestens einen Mikroorganismus verstanden, der die Fermentation im Rahmen seines Stoffwechsels ausführt. Die Temperatur wird während der Fermentation bevorzugt zwischen 10 und 50°C, vorzugsweise zwischen 20 und 40°C, besonders bevorzugt zwischen 25 und 35 °C gewählt. Zudem handelt es sich im Rahmen der vorliegenden Erfindung bevorzugt um eine anaerobe oder mikroanaerobe Fermentation. Die Fermentation erfolgt bevorzugt in einem Rührkessel-, oder in einem Schlaufenreaktor oder in einem Air-Lift-Reaktor oder einem Blasensäulenreaktor.

Unter dem Begriff "In-Kontakt-Bringen" wird im Rahmen von Schritt c) jede Art des In-Kontakt-Bringens verstanden, die dem Fachmann als für den erfindungsgemäßen Zweck geeignet erscheint. Bevorzugt erfolgt das in-Kontakt-Bringen gemäß Schritt c) durch Durchleiten der gasförmigen Zusammensetzung durch das Saftkonzentrat, besonders bevorzugt ist dabei die dem Fachmann bekannte Methode des Gas-Stripping. Das Gas-Stripping wird vorzugsweise bei einem Druck zwischen 0,1 und 2 bar, besonders bevorzugt zwischen 0,5 und 1,5 bar, durchgeführt. Besonders bevorzugt ist ein Stripping bei Unterdruck.

Um ein effizientes Gas-Stripping zu erzielen, werden die Gasblasen vorzugsweise dispergiert. Dies kann mit einem Rührer erfolgen, der so angeordnet ist, dass feine Blasen des Trägergases entstehen. Ebenso ist eine Feinverteilung der Gasblasen durch einen Sparger, ein mit kleinen Löchern ausgestattetes Begasungsorgan, möglich.

Außerdem ist es bevorzugt, das In-Kontakt-Bringen gemäß Schritt c) des erfindungsgemäßen Verfahrens in einer Säule durchzuführen, in der durch geeignete Einbauten oder Füllkörper eine große Stoffaustauschfläche erzielt wird. Besonders bevorzugt bewegen sich dabei Flüssigkeit und Gasstrom im Gegenstrom zueinander, also in gegensätzliche Richtungen.

Unter dem Begriff "Saftkonzentrat" wird im Rahmen der vorliegenden Erfindung jede Flüssigkeit pflanzlichen Ursprungs verstanden, die dem Fachmann als für das erfindungsgemäße Verfahren geeignet bekannt ist, die beispielsweise durch Pressen des pflanzlichen Rohmaterials entstanden ist und deren Saccharidgehalt gegenüber der einfachen Pressung erhöht ist. Bei dem pflanzlichen Ursprung handelt es sich bevorzugt um ein Fruchtgemüse oder Obst.

In einer besonders bevorzugten Ausführungsform handelt es sich bei dem Ursprung des Saftkonzentrats um eine Pressung aus Apfel, Birne, Orange, Mango, Kirsche, Heidelbeere, Johannisbeere, Maracuja, Lychee, Guave, Erdbeere, Himbeere, Brombeere, Stachelbeere, Tomate, Mirabelle, Aprikose, Pfirsich, Traube, Melone, Pflaume, Zwetschge, Karotte und/oder Schlehe. Auch sind Mischungen aller vorgenannten pflanzlichen Rohmaterialien im Rahmen der vorliegenden Erfindung geeignet.

Besonders vorteilhaft ist das erfindungsgemäße Verfahren für Saftkonzentrate mit einem Saccharidgehalt von mehr als 20% (w/v), wobei es insbesondere geeignet ist für einen Saccharidgehalt von mehr als 25% (w/v), weiter bevorzugt für einen Saccharidgehalt von mehr als 30% (w/v), bevorzugter für einen Saccharidgehalt von mehr als 35% (w/v). Ebenfalls besonders bevorzugt ist ein Saccharidgehalt von höchstens 75% (w/v), bevorzugter höchstens 55% (w/v) und am meisten bevorzugt höchstens 45% (w/v), wobei es im Rahmen der vorliegenden Erfindung möglich ist, sämtliche der bevorzugten Ober- und Untergrenzen miteinander zu kombinieren. Bevorzugte Konzentrationsbereiche, für die das erfindungsgemäße Verfahren besonders gut geeignet ist, sind ein Saccharidgehalt von 25 bis 75% (w/v) und 30 bis 55% (w/v) sowie besonders bevorzugt von 35 bis 45% (w/v). Saftkonzentrate in diesen Bereichen sind aufgrund Ihrer hohen Zuckerkonzentration bei dennoch hohem Gehalt an freiem Wasser nur schlecht lagerstabil. Eine Verminderung des Saccharidgehalts mit den aus dem Stand der Technik bekannten Verfahren, wie beispielsweise in der US 4,971,813 beschrieben, würde hier nur zu einer unzureichenden Reduktion der Saccharide führen, sodass weiterhin leicht mikrobieller Verderb auftreten kann und die Konzentrate bei sehr niedrigen Temperaturen unter hohem Energieaufwand - meist tiefgefroren bei 0°C - gelagert werden müssen. Eine Saccharidreduktion nach dem erfindungsgemäßen Verfahren kann gerade in diesen Fällen lagerstabile Saftkonzentrate erzeugen, die zudem über eine ausgezeichnete sensorische und optische Qualität verzügen.

Unter dem Begriff "Saccharid" werden im Rahmen der vorliegenden Erfindung alle Kohlenhydrate verstanden, die dem Fachmann als Bestandteil von Saftkonzentraten wie vorstehend definiert bekannt sind. Insbesondere werden im Rahmen der vorliegenden Erfindung unter den Begriff "Saccharid" Monosaccharide (Einfachzucker, z. B. Glucose, Fructose), Disaccharide (Zweifachzucker, z. B. Saccharose, Lactose, Maltose) und Oligosaccharide (Mehrfachzucker, z. B. Raffinose) verstanden.

Eine Zusammensetzung wird im Rahmen der vorliegenden Erfindung dann als "gasförmig" bezeichnet, wenn deren Teilchen sich in großem Abstand voneinander frei bewegen und den verfügbare Raum gleichmäßig ausfüllen. Im Vergleich zum festen oder flüssigen Aggregatszustand nimmt die gleiche Masse im gasförmigen Zustand unter Normalbedingungen den rund tausend- bis zweitausendfachen Raum ein.

Bei dem Begriff "gasförmige Zusammensetzung" kann es sich im Rahmen der vorliegenden Erfindung um Luft oder einen oder mehrere Einzelbestandteile von Luft, wie Stickstoff, Kohlendioxid und/oder Sauerstoff handeln. Besonders bevorzugt sind dabei gasförmige Zusammensetzungen, die keinen Sauerstoff enthalten, wobei es insbesondere bevorzugt ist, wenn es sich bei der gasförmigen Zusammensetzung um Fermentationsgase handelt, die sich durch einen gegenüber Luft erhöhten Kohlendioxidanteil und keinen oder nur einen sehr geringen Sauerstoffanteil auszeichnen. Im Falle einer aeroben Fermentation ist es dabei möglich, dass das Fermentationsgas einen gegenüber Luft um mindestens 1 Vol.-% erhöhten Anteil an Kohlendioxid aufweist, im Fall einer anaeroben Fermentation ist es dabei möglich, dass der Volumenanteil von Kohlendioxid bei mindestens 10 Vol.-% liegt.

Fermentationsgas(e) oder Gase ohne Sauerstoffanteil als "gasförmige Zusammensetzung" sind besonders vorteilhaft, da dann die ursprünglichen Farbeigenschaften des Saftkonzentrats noch besser erhalten werden können. Es ist zudem besonders bevorzugt, dass es sich bei der gasförmigen Zusammensetzung um das Fermentationsgas handelt, das während der Fermentation des in Schritt b) genannten Saftkonzentrats entsteht. In diesem Fall ist die Wahl von Fermentationsgas als gasförmige Zusammensetzung besonders vorteilhaft, da keine zusätzlichen Kosten und Prozessschritte anfallen, um die gasförmige Zusammensetzung bereitzustellen.

In einer bevorzugten Ausführungsform betrifft die vorliegende Erfindung ein Verfahren, bei dem die gasförmige Zusammensetzung nach Durchführen des Schrittes d) in Form des Schrittes c) wiederholt mit dem Saftkonzentrat in-Kontakt-gebracht wird. Im Rahmen dieser bevorzugten Ausführungsform ist es damit möglich die gasförmige Zusammensetzung wiederzuverwerten, da nach Durchleiten der gasförmigen Zusammensetzung durch den Adsorber der in dem fermentierenden Saftkonzentrat aufgenommene Alkohol im Adsorber verbleibt und die gasförmige Zusammensetzung somit wiederholt zum Austrag von weiteren Alkoholmolekülen aus der fermentierenden Flüssigkeit eingesetzt werden kann. Im Rahmen dieser bevorzugten Ausführungsform ist es zudem besonders bevorzugt, wenn es sich bei der gasförmigen Zusammensetzung um Fermentationsgas handelt.

Unter dem Begriff "In-Kontakt-Bringen" wird im Rahmen von Schritt d) des erfindungsgemäßen Verfahrens jede Art des In-Kontakt-Bringens verstanden, die dem Fachmann als für den erfindungsgemäßen Zweck geeignet erscheint. Bevorzugt erfolgt das In-Kontakt-Bringen im Rahmen von Schritt d) durch das Durchleiten der gasförmigen Zusammensetzung durch eine (oder mehrere) Säule(n) enthaltend den Adsorber. Vorzugsweise werden mehrere, besonders bevorzugt 2 bis 6 Säulen verwendet. Diese Säulen können in Reihe oder parallel geschalten sein.

Unter dem Begriff "Adsorber" wird im Rahmen der vorliegenden Erfindung jedes Material verstanden, das einen Zeolithen umfasst und das dem Fachmann als für den erfindungsgemäßen Zweck geeignet erscheint. Dabei können die Säulen das gleiche oder ein unterschiedliches Adsorbermaterial enthalten.

Unter dem Begriff "Zeolith" wird im Rahmen der vorliegenden Erfindung jedes kristalline Alumosilikat verstanden. Desweiteren werden im Rahmen der vorliegenden Erfindung unter den Begriff "Zeolith" alle Materialien subsumiert, die die Gerüststruktur eines Zeolithen aufweisen, wie beispielsweise Silicalite.

Der Anteil des Zeolithen an dem Adsorber liegt im Rahmen einer bevorzugten Ausführungsform bei mindestens 10 Gew.-% bezogen auf das Gesamtgewicht des Adsorbers, bevorzugt bei mindestens 25 Gew.-%, weiter bevorzugt bei mindestens 50 Gew.-%, besonders bevorzugt bei mindestens 75 Gew.-%, insbesondere bei mindestens 85 Gew.-% und am meisten bevorzugt bei mindestens 90 Gew.-%. Dabei ist es ebenfalls besonders bevorzugt, dass der Adsorber einen Anteil eines Zeolithen mit einem Porendurchmesser von höchstens 8 Å (oder höchstens 7,5 Å, höchstens 7 Å, höchstens 6,5 Å, bzw. in den nachfolgend als besonders bevorzugt genannten Bereichen des Porendurchmessers) von mindestens 90 Gew.-%, bevorzugt mindestens 95 Gew.-%, besonders bevorzugt 100 Gew.-% bezogen auf das Gesamtgewicht des Adsorbers umfasst. Desweiteren ist es bevorzugt, wenn der Anteil des Zeolithen mit einem Porendurchmesser von höchstens 8 Å (oder höchstens 7,5 Å, höchstens 7 Å, höchstens 6,5 Å, bzw. in den nachfolgend als besonders bevorzugt genannten Bereichen des Porendurchmessers) im Bereich von 25 bis 100 Gew.-% bezogen auf das Gesamtgewicht des Adsorbers, bevorzugt im Bereich von 50 bis 100 Gew.-%, weiter bevorzugt im Bereich von 75 bis 100 Gew.-% und am meisten bevorzugt im Bereich von 90 bis 100 Gew.-% bezogen auf das Gesamtgewicht des Adsorbers gewählt wird.

In einer weiteren bevorzugten Ausführungsform wird der Porendurchmesser des Zeolithen im Bereich von 5 bis 8 Å, bevorzugter 5,5 bis 7 Å, weiter bevorzugt 6 bis 6,5 Å gewählt. Insbesondere bevorzugt ist auch ein Bereich von 5 bis 6,5 Å, bevorzugter von 2,4 bis 3,4 Å und ebenfalls besonders bevorzugt von 1,5 bis 3,5 Å.

In einer weiteren bevorzugten Ausführungsform liegt das Massenverhältnis der adsorbierten Verbindungen zur Masse des Zeolithen mit einem Porendurchmesser von höchstens 8 Å vorzugsweise im Bereich von 1 bis 1000, weiter bevorzugt von 2 bis 500, insbesondere bevorzugt von 3 bis 200, ebenfalls besonders bevorzugt von 4 bis 100 und am meisten bevorzugt im Bereich von 5 bis 50. Dies gilt insbesondere, wenn unter den adsorbierten Verbindungen Alkohole enthalten sind.

In einer besonders bevorzugten Ausführungsform handelt es sich bei dem Zeolithen um einen Zeolithen, der bei einer Temperatur von 40°C und einem Druck von 1,013 bar absolut mindestens die zweifache Masse, bevorzugt die 2,5fache Masse und besonders bevorzugt die dreifache Masse an Alkoholen, bevorzugt Methanol, Ethanol oder Propanol, im Vergleich zu Wasser bindet, wenn es sich bei der Flüssigkeit um eine wässrige Lösung von mindestens 50 g/L Alkoholen handelt. Bevorzugt wird eine gasförmige Mischung bestehend aus Alkoholen und Wasser aus der Flüssigkeit durch Stripping erzeugt. Insbesondere bevorzugt ist es dabei, dass mindestens 50% der in der Flüssigkeit vorhandenen Alkohole an den Zeolithen gebunden werden können. Diese Eigenschaften des Zeolithen können bestimmt werden, indem 500 mL einer wässrigen Lösung mit mindestens 50 g/L des Alkohols für 24 Stunden bei einem Druck von 1,013 bar und einer Temperatur von 30°C mit 1 L Inertgasvolumen pro Minute gestrippt werden und der mit dem Alkohol angereicherte Gasstrom durch eine Säule, die mit 400 g des Zeolithen gefüllt ist, geleitet wird. Der an dem Alkohol abgereicherte Gasstrom wird zurückgeführt. Über eine Gewichtsbestimmung des Zeolithen vor und nach dem Versuch wird die insgesamt aufgenommene Masse bestimmt. Der Anteil an Wasser kann durch Karl-Fischer-Titration bestimmt werden. Der Rest der gebundenen Masse ist auf den adsorbierten Alkohol zurückzuführen. Bevorzugt wird eine Flüssigkeit bestehend aus 50 g/l Ethanol in Wasser verwendet.

Besonders bevorzugt sind im Rahmen der vorliegenden Erfindung Zeolithe mit einem SiO₂/Al₂O₃-Verhältnis (Molverhältnis) von mindestens 50, bevorzugt mindestens 150, ebenfalls bevorzugt mindestens 200, weiter bevorzugt mindestens 300, insbesondere bevorzugt mindestens 600, besonders bevorzugt mindestens 900 und am meisten bevorzugt mindestens 1200. Desweiteren ist es bevorzugt, wenn das SiO₂/Al₂O₃-Verhältnis des Zeolithen im Bereich 50 bis 1200, bevorzugt 100 bis 1200, weiter bevorzugt 300 bis 1200 und am meisten bevorzugt 600 bis 1200 gewählt wird.

Besonders bevorzugt sind Zeolithe des beta- oder MFI-Typs oder ein Silicalit.

Weitere mögliche Bestandteile des Adsorbers können im Rahmen der vorliegenden Erfindung ausgewählt werden aus der Gruppe bestehend aus Silica, Bentonite, Silicalite, Silikate, Tone, Hydrotalcite, Aluminiumsilikate, Oxidpulver, Glimmer, Gläser, Aluminate, Clinoptolite, Gismondine, Quartze, Aktivkohlen, Knochenkohle, Montmorillonite sowie organischen Polymeren, die dem Fachmann als für das erfindungsgemäße Verfahren geeignet bekannt sind, und deren Mischungen. Zudem ist Polytetrafluoroethylen (PTFE, Teflon) als Bestandteil des Adsorbers geeignet. Der Anteil an einem Bindemittel und/oder PTFE an dem Adsorber beträgt im Rahmen des erfindungsgemäßen Verfahrens bevorzugt höchstens 75 Gew.-%, bevorzugter höchstens 50 Gew.-%, weiter bevorzugt höchstens 25 Gew.-%, insbesondere bevorzugt höchstens 20 Gew.-% und am meisten bevorzugt höchstens 10 Gew.-%. Dabei ist es besonders bevorzugt, wenn der Anteil an einem Bindemittel und/oder PTFE an dem Adsorber im Bereich von 10 bis 50 Gew.-%, bevorzugter im Bereich von 10 bis 25 Gew.-% gewählt wird.

Unter dem Begriff "Porendurchmesser" wird der maximale Durchmesser einer theoretischen Kugel verstanden, die in die Mikroporen des Zeolithen eingebettet werden kann.

Unter dem Begriff "Moleküldurchmesser" wird der Durchmesser des maximalen Projektionsdurchmessers eines Moleküls verstanden.

Das erfindungsgemäße Verfahren bietet weiterhin den Vorteil, dass an den Adsorber gebundene Moleküle auf einfache und ökonomisch sinnvolle Art und Weise abgetrennt und rückgewonnen werden können. Bevorzugt erfolgt die Rückgewinnung des/der an den Adsorber gebundenen Moleküls/Moleküle durch Desorption. Alternativ kann der Adsorber durch Verbrennung oder Oxidation oder thermische Zersetzung oder sonstige chemische Umsetzung der adsorbierten Moleküle regeneriert werden.

Es ist insbesondere möglich eine selektive Desorption des/der an den Adsorber gebundenen Moleküls/Moleküle, wie beispielsweise einem kurzkettigen Alkohol, vom Adsorbens durch Erhöhung der Temperatur und / oder Verringerung des Drucks innerhalb der Säule durchzuführen. In einer bevorzugten Ausführungsform des Verfahrens wird die thermische Energie über die Säulenwand und ggf. zusätzlich über die Heizwendeln im Inneren der Säule direkt auf die Adsorbenspackung eingebracht. Bevorzugt sind Temperaturen zwischen 25 und 300°C und Absolutdrücke zwischen 0 und 10 bar. Besonders bevorzugt sind Temperaturen zwischen 40 und 180°C, sowie Absolutdrücke bei Unterdruck, vorzugsweise zwischen 0,01 und 1 bar.

Bevorzugt wird für den Austrag des desorbierten Moleküls/Moleküle aus der Säule ein Trägergas verwendet. Es ist möglich, das gleiche inerte Trägergas zu verwenden, welches auch im Rahmen des Schritts c) des erfindungsgemäßen Verfahrens eingesetzt wird. Ebenfalls bevorzugt werden die Temperatur und der Absolutdruck des Trägergases entsprechend den oben beschriebenen Temperaturen und Absolutdrücken innerhalb der Säule eingestellt. Für diesen Zweck eignen sich vorgeschaltete Wärmetauscher und / oder Drosseln beziehungsweise Kompressoren.

Die Desorption kann im Wirbelschichtbetrieb durchgeführt werden.

### Weiterhin kann die Desorption

- durch Verdrängung mittels anderer Komponenten;
- thermisch, d.h. durch Erhöhung der Temperatur des Adsorptionsmittels (Temperature-Swing-Adsorptionsverfahren (TSA));
- durch das sogenannte Pressure-Swing-Adsorptionsverfahren (PSA), d.h. durch Absenkung des Druckes;
- durch chemische Umsetzung
- durch eine Kombination der vorgenannten Verfahren erfolgen.

Ebenfalls bevorzugt kann bei der Desorption ein Spülgas verwendet werden. Bevorzugte Spülgase sind inerte Gase, besonders bevorzugt sind die Spülgase Luft, Kohlenstoffdioxid, Stickstoff, Edelgase oder Mischungen daraus. Es ist weiterhin möglich, dass das Spülgas Wasser enthält. Besonders bevorzugt liegt die Temperatur des Spülgases oberhalb der Temperatur des Verbundmaterials. Weiterhin bevorzugt ist die Strömungsrichtung bei der Desorption umgekehrt zur Strömungsrichtung des Fluids bei der Adsorption d.h. sodass die Desorption entgegen dem bei der Adsorption entstandenen Gradienten der Konzentration der an dem Verbundmaterial adsorbierten organischen Komponente erfolgt.

Im Rahmen des erfindungsgemäßen Verfahrens ist es erforderlich, dass die Schritte c) und d) zumindest zeitweise gleichzeitig erfolgen. "Zumindest zeitweise" bedeutet in diesem Zusammenhang, dass über einen Zeitraum von mindestens 10% der Gesamtdauer des erfindungsgemäßen Verfahrens gemäß den Schritten c) und d) alle Vorgänge der Schritte c) und d) zeitgleich durchgeführt werden, bevorzugt über einen Zeitraum von mindestens 20%, weiter bevorzugt über einen Zeitraum von mindestens 30%, insbesondere bevorzugt über einen Zeitraum von mindestens 40% und am meisten bevorzugt über einen Zeitraum von mindestens 60%. Desweiteren ist es im Rahmen des erfindungsgemäßen Verfahrens besonders bevorzugt, dass die Schritte b), c) und d) zumindest zeitweise gleichzeitig erfolgen. "Zumindest zeitweise" bedeutet in diesem Zusammenhang ebenfalls, dass über einen Zeitraum von mindestens 10% der Gesamtdauer des erfindungsgemäßen Verfahrens gemäß den Schritten b) bis d) alle Vorgänge der Schritte b) bis d) zeitgleich durchgeführt werden, bevorzugt über einen Zeitraum von mindestens 20%, weiter bevorzugt über einen Zeitraum von mindestens 30%, insbesondere bevorzugt über einen Zeitraum von mindestens 40% und am meisten bevorzugt über einen Zeitraum von mindestens 60%.

Durch eine zumindest zeitweise zeitgleiche Durchführung der Schritte c) und d) des erfindungsgemäßen Verfahrens wird sichergestellt, dass der durch die Fermentation entstandene Alkohol regelmäßig über die gasförmige Zusammensetzung aus dem fermentierenden Saftkonzentrat ausgetragen wird. Dabei ist es besonders bevorzugt, wenn der Alkoholgehalt in dem fermentierenden Saftkonzentrat bei höchstens 14 Vol.-%, bevorzugt höchstens 12 Vol.-%, weiter bevorzugt bei höchstens 10 Vol.-%, insbesondere bei höchstens 8 Vol.-% und am meisten bevorzugt bei höchstens 5 Vol.-% gehalten wird.

Im Zuge einer ökonomischenVerfahrensführung ist es zudem im Rahmen der vorliegenden Erfindung bevorzugt, wenn im Rahmen des erfindungsgemäßen Verfahrens die Schritte c) und d) zumindest einmal, bevorzugt 2 bis 50000 Mal, bevorzugter 50 bis 40000 Mal, weiter bevorzugt mindestens 500 bis 3500 Mal wiederholt werden. Insbesondere bevorzugt ist eine kontinuierliche Verfahrensführung des erfindungsgemäßen Verfahrens. Der Begriff der "kontinuierlichen Verfahrensführung" liegt hierbei im Rahmen des dem Fachmann bekannten Standardwissens. Eine bevorzugte Ausführungsform des erfindungsgemäßen Verfahrens ist auf ein Verfahren gerichtet, bei dem die gasförmige Zusammensetzung nach Durchführen des Schrittes d) in Form des Schrittes c) wiederholt mit dem Saftkonzentrat in-Kontakt-gebracht wird.

In einer besonders bevorzugten Ausführungsform umfasst die vorliegende Erfindung ein Verfahren zur Reduktion des Saccharidgehalts in Saftkonzentraten mit einer anfänglichen Saccharidkonzentration von mehr als 20% (w/v) und bis zu 75% (w/v) umfassend die Schritte
a) In-Kontakt-Bringen des Saftkonzentrats mit mindestens einem Mikroorganismus ausgewählt aus der Gruppe bestehend aus Hefen und Bakterien und deren Mischungen
b) Fermentation des Saftkonzentrats bei einer Temperatur ausgewählt im Bereich von 25 bis 35 °C unter anaeroben oder mikroanaeroben Bedingungen
c) In-Kontakt-Bringen des Saftkonzentrats mit einer gasförmigen Zusammensetzung
d) In-Kontakt-Bringen der gasförmigen Zusammensetzung mit einem Adsorber, wobei der Adsorber einen Zeolithen umfasst ausgewählt aus der Gruppe bestehend aus MFI-Zeolithen, Silicaliten und beta-Zeolithen und deren Mischungen
wobei die Schritte b), c) und d) über einen Zeitraum von mindestens 10%, bevorzugt über einen Zeitraum von mindestens 40%, der Gesamtdauer des erfindungsgemäßen Verfahrens gemäß den Schritten b) bis d) zeitgleich durchgeführt werden. In einer besonders bevorzugten Ausführungsform handelt es sich bei der gasförmigen Zusammensetzung um Fermentationsgas, das während der Fermentation gemäß Schritt b) des erfindungsgemäßen Verfahrens entstanden ist.

In einer besonders bevorzugten Ausführungsform umfasst die vorliegende Erfindung ein Verfahren zur Reduktion des Saccharidgehalts in Saftkonzentraten mit einer anfänglichen Saccharidkonzentration von mehr als 30% (w/v) und bis zu 55% (w/v) umfassend die Schritte
a) In-Kontakt-Bringen des Saftkonzentrats mit mindestens einem Mikroorganismus ausgewählt aus der Gruppe bestehend aus Hefen und Bakterien und deren Mischungen
b) Fermentation des Saftkonzentrats bei einer Temperatur ausgewählt im Bereich von 25 bis 35 °C unter anaeroben oder mikroanaeroben Bedingungen
c) In-Kontakt-Bringen des Saftkonzentrats mit einer gasförmigen Zusammensetzung
d) In-Kontakt-Bringen der gasförmigen Zusammensetzung mit einem Adsorber, wobei der Adsorber einen Zeolithen umfasst ausgewählt aus der Gruppe bestehend aus MFI-Zeolithen, Silicaliten und beta-Zeolithen und deren Mischungen
wobei die Schritte b), c) und d) über einen Zeitraum von mindestens 10%, bevorzugt über einen Zeitraum von mindestens 40%, der Gesamtdauer des erfindungsgemäßen Verfahrens gemäß den Schritten b) bis d) zeitgleich durchgeführt werden und wobei die gasförmige Zusammensetzung nach Durchführen des Schrittes d) in Form des Schrittes c) wiederholt mit dem Saftkonzentrat in Kontakt gebracht wird. In einer besonders bevorzugten Ausführungsform handelt es sich bei der gasförmigen Zusammensetzung um Fermentationsgas, das während der Fermentation gemäß Schritt b) des erfindungsgemäßen Verfahrens entstanden ist.

Es ist im Rahmen der vorliegenden Erfindung möglich, dass sämtliche der beschriebenen bevorzugten Ausführungsformen miteinander kombiniert werden.

Die vorliegende Erfindung umfasst zudem die Verwendung eines Verfahrens wie vorstehend beschrieben, zur Herstellung eines Saftkonzentrats mit reduziertem Saccharidgehalt.

Das an Sacchariden reduzierte Saftkonzentrat kann zur Herstellung eines an Sacchariden reduzierten Safts mit Wasser und optional mit Aromastoffen versetzt werden.

### Beispiel

Im Folgenden wird die vorliegende Erfindung durch das Heranziehen eines Beispiels näher erläutert. Es wird betont, dass auch das Beispiel lediglich veranschaulichenden Charakter besonderer Ausführungsformen besitzt und den Rahmen der vorliegenden Anmeldung in keinster Weise beschränkt.

### Beispiel - Reduktion des Zuckergehalts in Orangensaftkonzentrat

0,5 Liter Orangensaftkonzentrat wurden mit Saccharomyces cerevisiae angeimpft und über 300 Stunden bei 30 °C unter anaeroben Bedingungen fermentiert. Einen Teil des dabei produzierten CO₂ wurde aus der Abluft abgezweigt und wieder mit 1 L/min in das Flüssigkeitsvolumen eingeführt. Bei Austritt aus der Flüssigkeit wurde der mit Ethanol angereicherte Gasstrom mittels einer Membranpumpe (KNF Neuberger, Deutschland) und einem Volumenstromregler (Swagelok, Deutschland) durch eine Glassäule geleitet (Gassner Glastechnik, Deutschland), welche mit 2000 g Zeolith-Formkörper (ZSM-5, H-Form, SiO₂/Al₂O₃=1000; inertes Bindemittel, Hersteller: Clariant AG) gefüllt war. Der an Ethanol abgereicherte Gasstrom wurde dann nach Austritt aus der Glassäule zurück in den Reaktor geführt. Nach 300 Stunden wurde der Versuch abgebrochen und die verbliebene Ethanol- und Zucker-Konzentrationen in der Vorlage chromatografisch quantifiziert. Die Ergebnisse zeigten eine wesentliche Reduzierung des Zuckergehalts und die erreichte Ethanol Konzentration lag unter 5 %.

## Patentansprüche

1. Verfahren zur Reduktion des Saccharidgehalts in Saftkonzentraten mit einer anfänglichen Saccharidkonzentration von mehr als 20% (w/v) umfassend die Schritte
a) In-Kontakt-Bringen des Saftkonzentrats mit mindestens einem Mikroorganismus
b) Fermentation des Saftkonzentrats
c) In-Kontakt-Bringen des Saftkonzentrats mit einer gasförmigen Zusammensetzung
d) In-Kontakt-Bringen der gasförmigen Zusammensetzung mit einem Adsorber, wobei der Adsorber einen Zeolithen umfasst
wobei die Schritte c) und d) zumindest zeitweise gleichzeitig erfolgen.

2. Verfahren nach Anspruch 1, wobei die Schritte b), c) und d) zumindest zeitweise gleichzeitig erfolgen.

3. Verfahren nach einem der vorhergehenden Ansprüche, wobei das Saftkonzentrat eine Saccharidkonzentration von mehr als 20 und bis zu 75% (w/v) aufweist.

4. Verfahren nach einem der vorhergehenden Ansprüche, wobei das Saftkonzentrat eine Saccharidkonzentration von 30 bis 55% (w/v) aufweist.

5. Verfahren nach einem der vorhergehenden Ansprüche, wobei die gasförmige Zusammensetzung nach Durchführen des Schrittes d) in Form des Schrittes c) wiederholt mit dem Saftkonzentrat in Kontakt gebracht wird.

6. Verfahren nach einem der vorhergehenden Ansprüche, wobei der mindestens eine Mikroorganismus ausgewählt wird aus der Gruppe bestehend aus Hefen und Bakterien und deren Mischungen.

7. Verfahren nach einem der vorhergehenden Ansprüche, wobei der Zeolith ausgewählt wird aus der Gruppe bestehend aus MFI-Zeolithen, Silicaliten und beta-Zeolithen und deren Mischungen.

8. Verfahren nach einem der vorhergehenden Ansprüche, wobei die Fermentation des Saftkonzentrats gemäß Schritt b) unter anaeroben oder mikroanaeroben Bedingungen erfolgt.

9. Verfahren nach einem der vorhergehenden Ansprüche, wobei der Adsorber zudem mindestens ein Bindemittel umfasst, ausgewählt aus der Gruppe bestehend aus Silica, Silikate, Bentonit, PTFE und deren Mischungen.

10. Verwendung eines Verfahrens wie in einem der Ansprüche 1 bis 9 beschrieben, zur Herstellung eines Saftkonzentrats mit reduziertem Saccharidgehalt.

## Claims

1. A method for reducing the saccharide content in juice concentrates having an initial saccharide concentration of more than 20% (w/v), comprising the steps:
a) contacting the juice concentrate with at least one microorganism,
b) fermenting the juice concentrate,
c) contacting the juice concentrate with a gaseous composition,
d) contacting the gaseous composition with an adsorber, wherein the adsorber comprises a zeolite,
wherein steps c) and d) are carried out simultaneously at least for a time.

2. The method as claimed in claim 1, wherein steps b), c) and d) are carried out simultaneously at least for a time.

3. The method as claimed in one of the preceding claims, wherein the juice concentrate has a saccharide concentration of more than 20 and up to 75% (w/v).

4. The method as claimed in one of the preceding claims, wherein the juice concentrate has a saccharide concentration of from 30 to 55% (w/v).

5. The method as claimed in one of the preceding claims, wherein, after step d) has been carried out, the gaseous composition is repeatedly contacted in the form of step c) with the juice concentrate.

6. The method as claimed in one of the preceding claims, wherein the at least one microorganism is selected from the group consisting of yeasts and bacteria and mixtures thereof.

7. The method as claimed in one of the preceding claims, wherein the zeolite is selected from the group consisting of MFI zeolites, silicalites and beta zeolites and mixtures thereof.

8. The method as claimed in one of the preceding claims, wherein the fermentation of the juice concentrate according to step b) is carried out under anaerobic or microanaerobic conditions.

9. The method as claimed in one of the preceding claims, wherein the adsorber additionally comprises at least one binder selected from the group consisting of silica, silicates, bentonite, PTFE and mixtures thereof.

10. A use of the method as described in one of claims 1 to 9, for producing a juice concentrate with a reduced saccharide content.

## Revendications

1. Procédé pour la réduction de la teneur en saccharide dans des concentrats de jus présentant une concentration initiale en saccharide supérieure à 20% (P/V), comprenant les étapes consistant à
a) mettre en contact le concentrat de jus avec au moins un micro-organisme
b) faire fermenter le concentrat de jus
c) mettre en contact le concentrat de jus avec une composition gazeuse
d) mettre en contact la composition gazeuse avec un adsorbant, l'adsorbant comprenant une zéolithe,
les étapes c) et d) se déroulant au moins par intermittence en même temps.

2. Procédé selon la revendication 1, les étapes b), c) et d) se déroulant au moins par intermittence en même temps.

3. Procédé selon l'une quelconque des revendications précédentes, le concentrat de jus présentant une concentration en saccharide supérieure à 20 et jusqu'à 75% (P/V).

4. Procédé selon l'une quelconque des revendications précédentes, le concentrat de jus présentant une concentration en saccharide de 30 à 55% (P/V).

5. Procédé selon l'une quelconque des revendications précédentes, la composition gazeuse étant mise en contact de manière répétée avec le concentrat de jus, sous forme de l'étape c), après la réalisation de l'étape d).

6. Procédé selon l'une quelconque des revendications précédentes, ledit au moins un micro-organisme étant choisi dans le groupe constitué par les levures et les bactéries et leurs mélanges.

7. Procédé selon l'une quelconque des revendications précédentes, la zéolithe étant choisie dans le groupe constitué par les zéolithes MFI, les silicalites et les zéolithes bêta et leurs mélanges.

8. Procédé selon l'une quelconque des revendications précédentes, la fermentation du concentrat de jus selon l'étape b) ayant lieu dans des conditions anaérobies ou micro-aérobies.

9. Procédé selon l'une quelconque des revendications précédentes, l'adsorbant comprenant en outre au moins un liant choisi dans le groupe formé par la silice, les silicates, la bentonite, le PTFE et leurs mélanges.

10. Utilisation d'un procédé tel que décrit dans l'une quelconque des revendications 1 à 9, pour la préparation d'un concentrat de jus présentant une teneur réduite en saccharide.
